# EUROPÄISCHE PATENTANMELDUNG

(11) **EP 1 992 911 A2**
(43) Veröffentlichungstag der Anmeldung: **19.11.2008**
(21) Anmeldenummer: 08008253.0
(22) Anmeldetag: 30.04.2008
(51) Int. Cl.: G01C 3/04

(54) **Laserentfernungsmesser-Modul und System bestehend aus optischen Fernrohrsystem aus Laserentfernungsmesser-Modul**

(30) Priorität: 15.05.2007 DE 102007022833
(71) Anmelder: Carl Zeiss Optronics GmbH, 73447 Oberkochen (DE)
(72) Erfinder: Burzel, Timo, 35633 Lahnau (DE)
(74) Vertreter: Böhmer, Sabine

(57) **Zusammenfassung**

Die Erfindung betrifft ein Laserentfernungsmesser-Modul (LEM-Modul) zum lösbaren Befestigen an einem optischen Fernrohrsystem, umfassend einen Senderkanal und einen Empfängerkanal zur Entfernungsmessung, wobei ein Anzeigekanal (9) vorgesehen ist, dessen eines Ende derart von außen zu einem Objektiv (2) des optischen Fernrohrsystems (1) anordenbar ist, dass eine Zielmarkierung (18) und/oder eine Anzeige, insbesondere eine Entfernungsanzeige (19), in das Sehfeld des optischen Fernrohrsystems (1) einspiegelbar ist. Eine Montageschnittstelle (4) des Laserentfernungsmesser-Moduls ist justierbar, insbesondere winkeljustierbar in x-und y-Richtung, ausgeführt ist, um die Einblendung der Zielmatkierung (18) und/oder der Anzeige (19) in das Sehfeld, insbesondere die Sehfeldmitte, des optischen Fernrohrsystems zu ermöglichen. Mit dem erfindungsgemäßen Laserentfernungsmesser-Modul können vorhandene Ziel- und Beobachtungsoptiken einfach und effizient nachgerüstet werden.

## Beschreibung

Die Erfindung betrifft ein Laserentfemungsmesser-Modul (LEM-Modul) zum lösbaren Befestigen an optischen Fernrohrsystemen. Die Erfindung betrifft des Weiteren ein System bestehend aus einem optischen Fernrohrsystem und einem Laserentfemungsmesser-Modul (LEM-Modul) zum lösbaren Befestigen an dem optischen Fernrohrsystem.

Es ist bekannt Laserentfernungsmesser in Zieloptiken zu integrieren.

Folgendes ist bei der Verwendung konventioneller Zielgeräte zu beachten:
- Die bestehende Zieleinrichtung eines Waffensystems ist zum Waffenrohr justiert, hat aber keinen festen Bezug zur Ausrichtung eines externen Lasermoduls.
- Eine Vorjustierung der Montageschnittstelle des LEM-Moduls ist unter Umständen nicht vorteilhaft, da die Nutzung eines LEM-Moduls für mehrere Modelle einer Waffen- bzw. Geräteserie gewährleistet sein soll, diese aber jeweils unterschiedliche Justierwinkel zum Waffenrohr aufweisen können.
- Unabhängig von der existierenden Justierung der Zieleinrichtung zur Waffe soll eine mögliche Laserzielmarkierung im Sehfeld der Zieleinrichtung die Sende- und Empfangsrichtung des Lasers ohne relevante Abweichungen aufzeigen.

Es ist die Aufgabe der Erfindung einen modularen Laserentfernungsmesser (LEM-Modul) mit Anzeige einer Laserzielmarke und Objektentfernung im Sehfeld zur Verfügung zu stellen. Dieser soll insbesondere als einfach befestigbares und abnehmbares Modul an einer vorhandenen Zieloptik, z.B. einem Zielfernrohr, welches auf handgehaltenen Waffen genutzt wird oder an einer handgehaltenen Beobachtungsoptik und Zieloptik, wie beispielsweise Feldstecher, Fernrohr oder Spektiv, Zielfernrohr Verwendung finden.

Diese Aufgabe wird durch die Merkmale des Anspruchs 1 gelöst.

Es ist eine weitere Aufgabe der Erfindung ein System bestehend aus einem optischen Fernrohrsystem und einem Laserentfemungsmesser-Modul (LEM-Modul) zum lösbaren Befestigen an dem optischen Fernrohrsystem zur Verfügung zu stellen. Diese Aufgabe wird durch die Merkmale des Anspruchs 13 gelöst.

Durch den modularen Laserentfernungsmesser mit angekoppelter Optik, die extern am Zielfernrohr wirkt, kann ein LEM-Modul zur Verfügung gestellt werden, das bei einer Vielzahl konventioneller optischer Fernrohrsysteme einsetzbar ist.

Unter optischen Fernrohrsystemen werden sowohl Beobachtungs- als auch Zieloptiken verstanden, diese können monokular oder binokular ausgebildet sein. Hierunter fallen beispielsweise Zielfernrohre, Spektive und Ferngläser.

Bei dem erfindungsgemäßen LEM-Modul kann eine kundenseitig vorhandene konventionelle Ziel- oder Beobachtungsoptik zur Ausrichtung des LEM-Moduls vor und während des Messvorgangs genutzt werden. Die Messergebnisse können im Sehfeld der konventionellen Ziel- oder Beobachtungsoptik angezeigt werden, ohne einen Eingriff in die existierenden Optiken bzw. eine Nachjustierung der existierenden Optik zum Waffensystemvornehmen zu müssen.

Das erfindungsgemäße LEM-Modul kann an eine Vielzahl von Ziel- und Beobachtungsoptiken unterschiedlicher Bauform nachgerüstet werden.

Das Umlenkprisma des LEM-Moduls kann schwenkbar und/oder klappbar angeordnet sein. Das Umlenkprisma kann gegenüber den feststehenden Bauelementen des LEM-Moduls, beispielsweise einer Montagebasis, schwenkbar und/oder klappbar ausgebildet sein. Das Umlenkprisma kann an zumindest einem dieser feststehenden Bauelemente befestigt sein. Z.B. kann das Umlenkprisma schwenkbar und/oder klappbar am Sender und/oder Empfänger des LEM-Moduls, insbesondere an deren Gehäuse befestigt sein. Das Umlenkprisma kann auch an der Montagebasis befestigt sein.

Das Umlenkprisma kann mit einer Befestigungseinrichtung am Objektiv, insbesondere am Objektivgehäuse, des optischen Fernrohrsystems lösbar befestigbar sein. Als Befestigungseinrichtung kann eine Klemmeinrichtung vorgesehen sein.

Das Umlenkprisma kann mit der Kollimatoroptik lösbar verbunden sein, z.B. über eine staub-, wasser- und/oder lichtdichte Verbindung, insbesondere einen Faltenbalg oder eine sonstige mechanische Kupplungseinrichtung. Die lösbare Verbindung kann eine Bewegung des Umlenkprismas zur Kollimatoroptik in x-, y- und z-Richtung kompensieren.

Vorteilhafte Aufführungsformen sind in den Unteransprüchen wiedergegeben.

Vorteilhafte Ausführungsformen sind in den Figuren wiedergegeben. Es zeigen
- Figur 1: ein erfindungsgemäßes LEM-Modul an einem Zielfernrohr befestigt,
- Figur 2: Ausschnitt von LEM-Modul und Zielfernrohr nach Figur 1,
- Figur 3: Gesamtansicht des LEM-Moduls und Zielfernrohr nach Figur 2,
- Figur 4: das LEM-Modul nach Figur 1, okularseitig,
- Figur 5: das LEM-Modul nach Figur 1, objektivseitig,
- Figur 6: das LEM-Modul mit den drei Kanälen,
- Figur 7: ein LEM-Modul und eine Zieloptik befestigt auf einer Panzerfaust,
- Figur 8: Sehfeld der Zieloptik mit Reticle und Zielmarkierung mit Winkelversatz,
- Figur 9: Sehfeld der Zieloptik mit Reticle und Zielmarkierung ohne Winkelversatz.

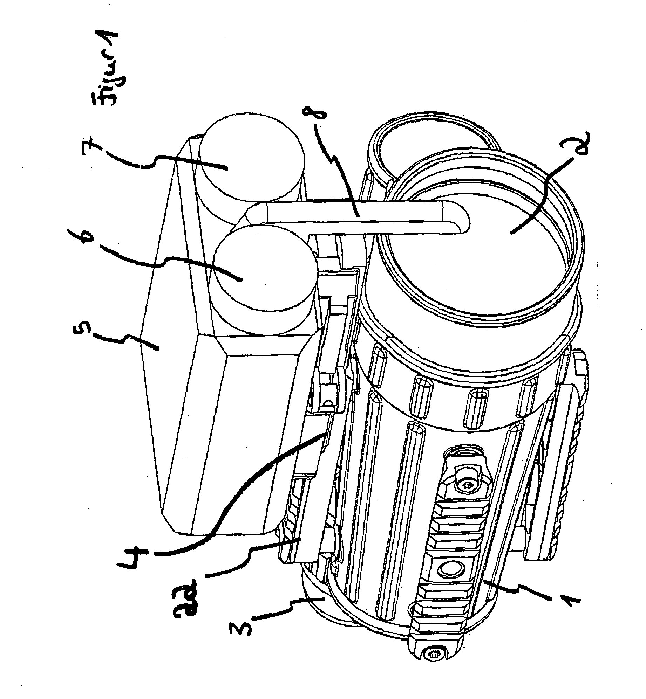

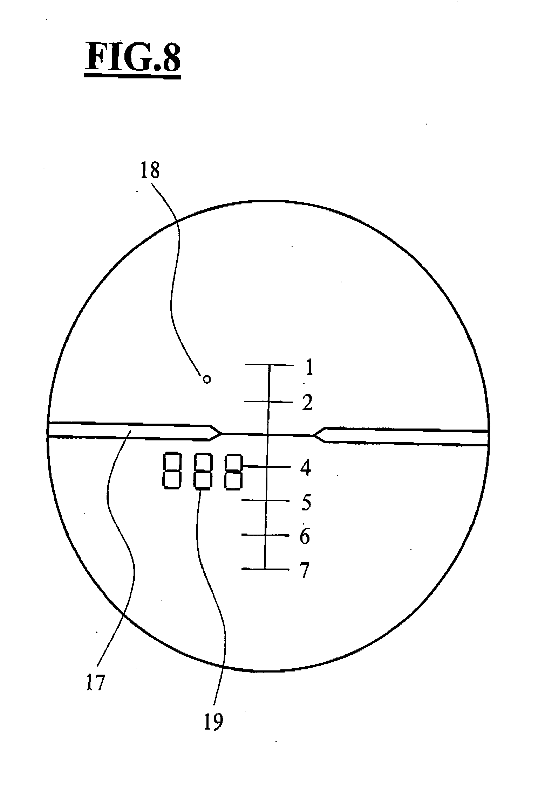

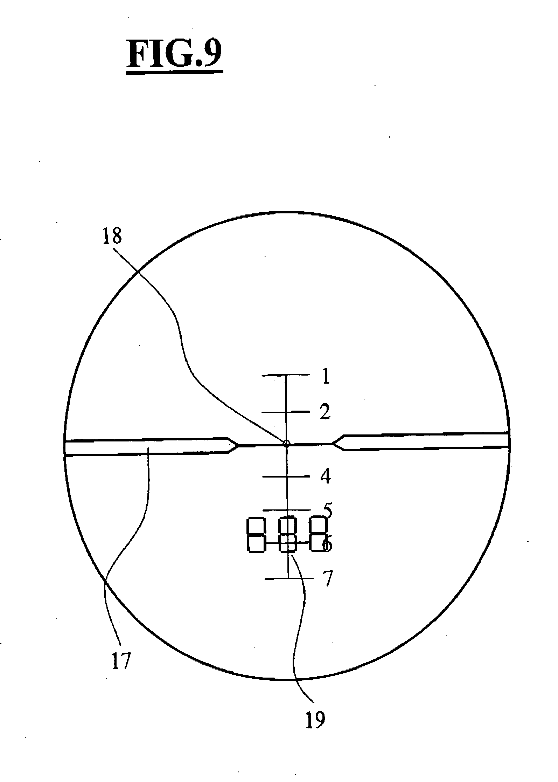

**Figur 1** zeigt ein optisches Ziel- oder Beobachtungsgerät, z.B. ein Zielfernrohr 1 mit einem Objektiv 2 und einem Okular 3 an dem über Befestigungsmittel 22 ein erfindungsgemäßes Laserentfemungsmesser-Modul (LEM-Modul) 5 abnehmbar angebracht ist. Das LEM-Modul 5 weist einen Sendekanal 6 und einen Empfangskanal 7 auf. Diese Kanäle 6 und 7 sind in Form von Objektivoptiken ausgebildet, welche in ihren Brennebenen eine Empfangs- bzw. eine Sendediode enthalten. Diese optischen Kanäle 6 und 7 senden bzw. empfangen Laserlicht. Zur Optimierung der Empfangsleistung ist der Empfangskanal zumindest annähernd parallel zur Senderichtung ausgerichtet. Zur Ermittlung der Entfernung eines Objektes wird die Zeit ermittelt, die das ausgesendete Licht benötigt, um vom Sendekanal 6 zum Objekt und wieder zum Empfangskanal 7 zu gelangen. Ausgehend von der Lichtgeschwindigkeit kann nun die Wegstrecke zum Objekt errechnet werden. Voraussetzung für diesen Funktionsablauf ist, dass der Anwender die Möglichkeit erhält, den Sende- und Empfangskanal 6 und 7 auf das Objekt zu richten. Hierzu kann eine Zieleinrichtung 1 unterschiedlicher Form Verwendung finden. Dabei soll die Zieleinrichtung 1 zur Ausrichtung des Lasersystems justiert sein, um die optischen Messkanäle des LEM-Moduls genau auf das Objekt auszurichten. Dies wird in **Figur 8** und **9** näher erläutert.

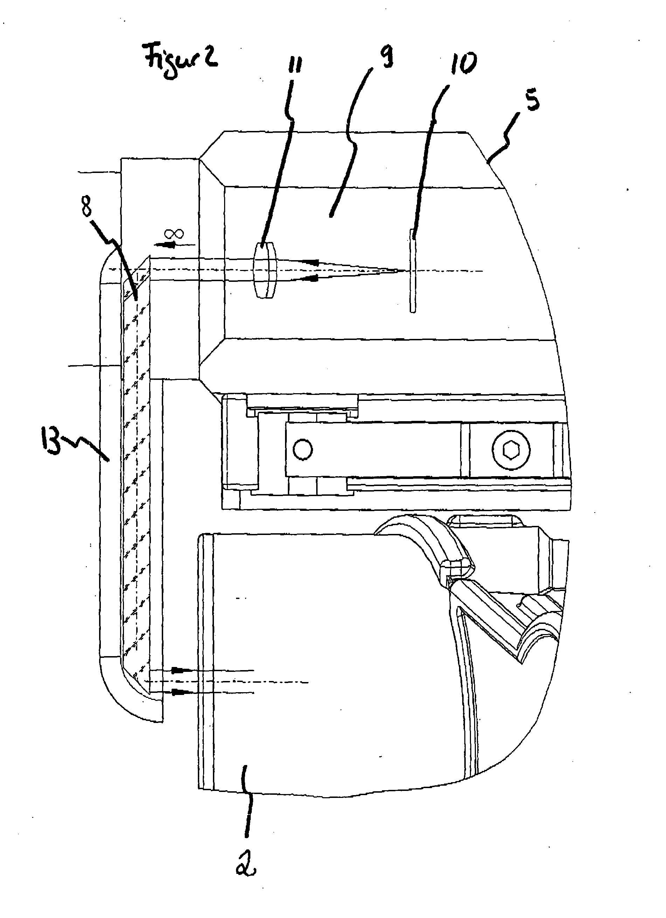

Das LEM-Modul 5 umfasst einen zusätzlichen optischen Kanal, welcher eine Zielmarkierung und eine Anzeige in der Fokusebene enthält und diese über eine Kollimationsoptik und ein invariantes 2*90° Umlenkprisma 8 in das Objektiv 2 der existierenden Zieleinrichtung 1 einblendet. Die Funktionsweise des zusätzlichen optischen Kanals wird in **Figur 2** erläutert.

Die invariante Einblendung der Laser-Zielmarke kann auch über ein anderes geeignetes optronisches Verfahren durchgeführt werden.

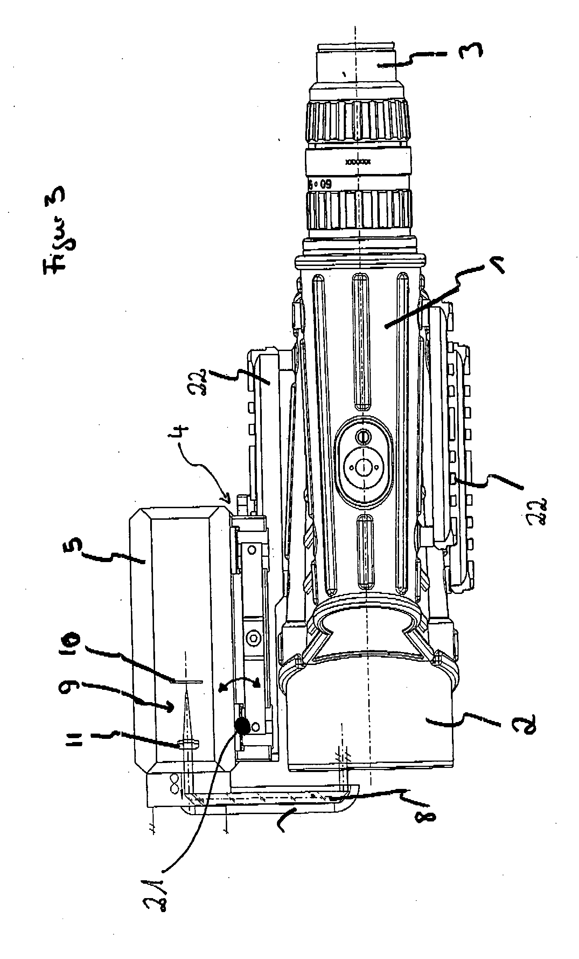

**Figur 2** und **Figur 3** zeigen das Objektiv 2 des Zielfernrohrs 1. An dem Zielfernrohr 1 ist das LEM-Modul 5 befestigt. Das LEM-Modul 5 weist einen zusätzlichen optischen Kanal 9 auf Für eine Entfernungsmessung mit dem LEM-Modul 5 wird über diesen optischen Kanal 9 eine Zielmarkierung und/oder ein Anzeigeelement von einem Punktstrahlerelement oder Pixeldisplay 10 über eine Kollimatoroptik 11 und das Umlenkprisma 8 in das Objektiv 2 des Zielfernrohrs 1 eingespiegelt. Die Zielmarkierung und das Anzeigeelement befindet sich in der Fokusebene des Anzeigenkanals 9. Zielmarkierung und Anzeigeinformation werden über die Kollimatoroptik in ein paralleles Strahlenbündel gewandelt. Die Zielmarkierung kann so in das Sehfeld eingespiegelt werden. Nach einer Messung kann ebenfalls das Messergebnis 19 eingespiegelt werden.

Das Pixeldisplay, insbesondere als Arraydisplay, wird zum Anpassen der Größe und der Position der angezeigten Informationen und/oder der elektronischen Justage herangezogen. Die elektronische Justage der Kollimatorachse zur Sende-/Empfangsachse erfolgt mit Hilfe einer entsprechenden Verstellung der elektronisch erzeugten Zielmarkierung.

Das Umlenkprisma 8 ist vor äußeren Einflüssen durch ein Gehäuse 13 geschützt. Das 2*90° Umlenkprisma ist als Stabprisma mit Dachkante ausgeführt. Dieses Prisma kann auch als "Tripelstreifen" bezeichnet werden. Die Vorteile dieses Prismas liegen darin, dass unabhängig von der Lage (Position) des Prismas zum Strahleintritt, der Strahlaustritt parallel zur Richtung des eintretenden Strahls, innerhalb der zulässigen Fertigungsgenauigkeit des Prismas verläuft. Eine solche Prismenausführung wird als invariant bezeichnet. Anstelle eines Umlenkprismas 8 sind auch Umlenkspiegel vorstellbar.

Die Bedienung des LEM-Moduls 5, im Besonderen das Auslösen der Entfernungsmessung kann am LEM-Modul 5, aber auch über externe Auslöser (Kabelkontaktierung, kabellos) erfolgen.

Die Helligkeit der Zielmarkierung bzw. der Anzeige kann vom Nutzer angepasst bzw. über einen Sensor geregelt werden, welcher bevorzugt zur Richtung des Lasersenders 6 positioniert ist.

**Figur 3** zeigt die Winkeljustageeinrichtung. Die Montageschnittstelle 4 des Laserentfernungsmesser-Moduls ist justierbar, insbesondere winkeljustierbar in x-und y-Richtung ausgeführt, um die Einblendung der Zielmarkierung 18 und/oder der Anzeige 19 in das Sehfeld, insbesondere in die Sehfeldmitte, des optischen Fernrohrsystems zu ermöglichen. Beispielsweise kann das Gehäuse, das Sender, Empfänger, Kollimatoroptik und/oder Elektronik enthalten kann, um einen Drehpunkt 21 schwenkbar gelagert sein. Dies ist durch einen Doppelpfeil angedeutet. Es kann eine kontinuierliche oder schrittweise Winkelstelleinrichtung vorgesehen sein.

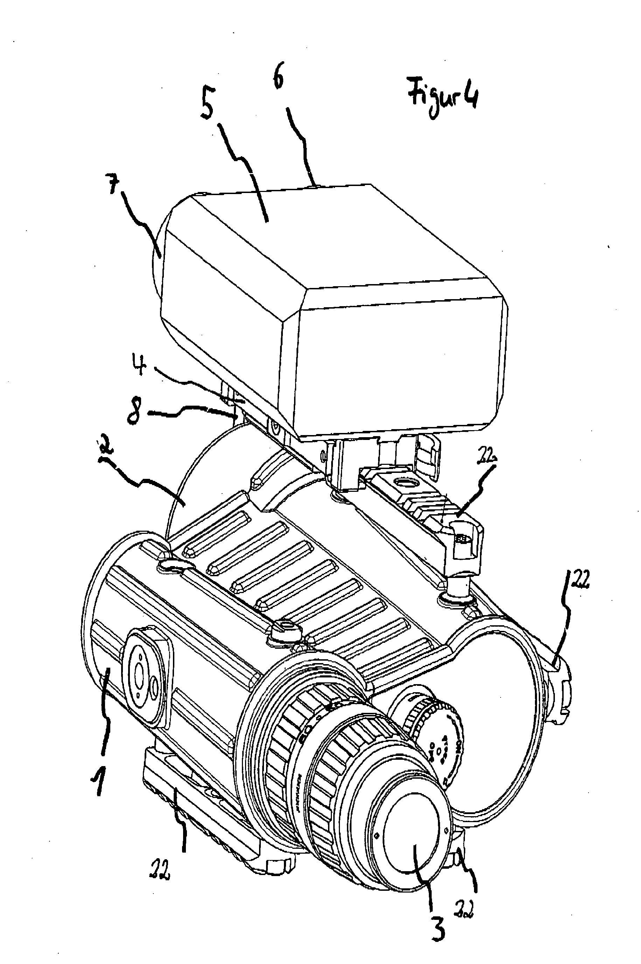

**Figur 4** zeigt Befestigungsmittel 4 in Form einer Klemmvorrichtung für das LEM-Modul 5. Hierüber kann das LEM-Modul 5 an der Befestigungsschiene 22 eines Fernrohrs 1 befestigt werden. Das Fernrohr 1 (Zielfernrohr, Zielsystem) weist mehrere Befestigungsmittel 4 bzw. Adaptionsmöglichkeiten auf, an denen eine Waffe und weitere Funktionseinheiten angebracht werden können.

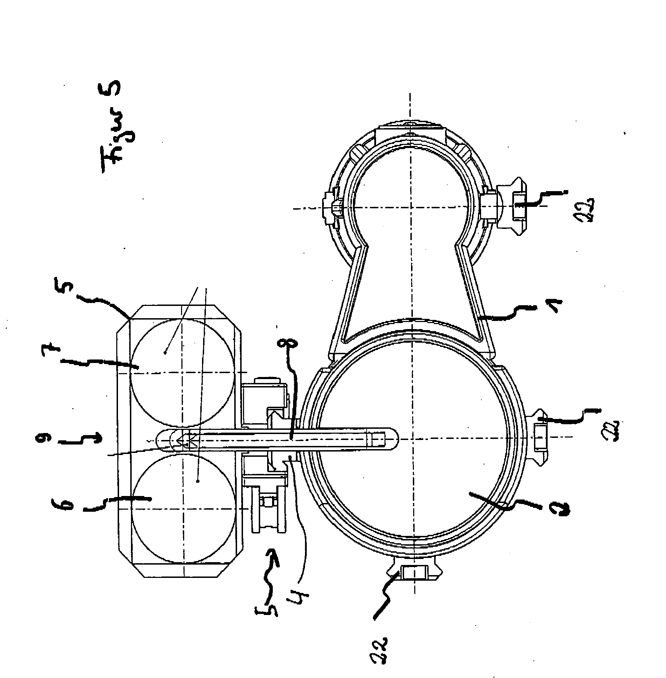

**Figur 5** zeigt eine Vorderansicht des erfindungsgemäßen LEM-Moduls 5 an einem Fernrohr 1.

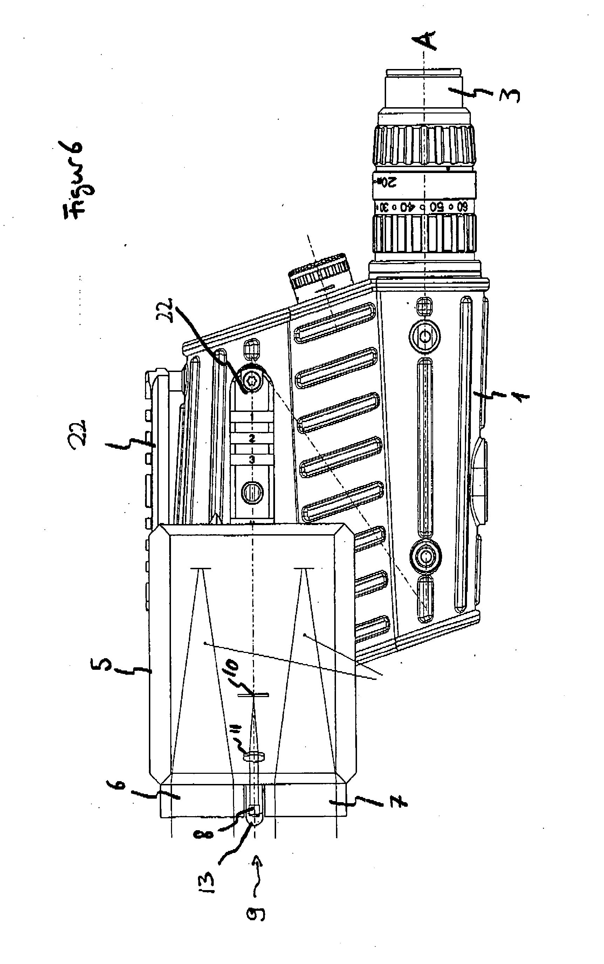

**Figur 6** zeigt den Sendekanal 6, den Empfangskanal 7 und den Anzeigekanal 9. Die optischen Achsen dieser 3 Kanäle sind parallel zueinander ausgerichtet. Sie sind zudem im Wesentlichen parallel zur optischen Achse des Objektivs 2 und Okulars 3 ausgerichtet Die Optische Achse A weist eine Faltung auf.

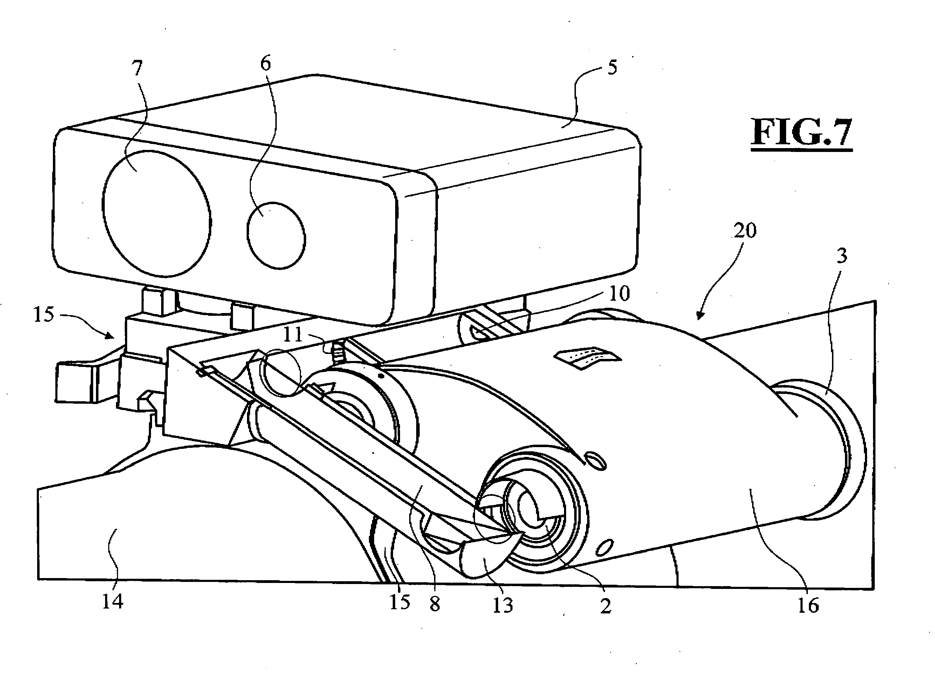

**Figur 7** zeigt eine Panzerfaust 14. An Befestigungsmitteln 15 ist eine Zieloptik 16, z.B. ein monokulares oder binokulares Fernglas, und ein LEM-Modul 5 angebracht. Der Anzeigenkanal 8 verläuft vom LEM-Modul 5 zu einem Objektiv 2 der Zieloptik 16. Die Zielmarkierung 18 und Anzeige 19 kann im Lasermodul 5 zur Ausrichtung des Sende- und Empfangskanals 6 und 7 justiert werden. Über einen Schwenkmechanismus 20 kann die Zieloptik 16 verschwenkt werden. Beim Transportieren der Waffe 14 wird die Zieloptik 16 platzsparend zum Waffenrohr hin eingeschwenkt und kann zum Zielen wieder ausgeschwenkt werden.

**Figuren 8** und **9** zeigen die Sehfelddarstellung für einen Beobachter bei Durchsicht durch ein Zielfernrohr 1. Ein Reticle 17 ist vorgegeben. Des Weiteren kann ein vom LEM-Modul 5 eingespiegelter Zielpunkt 18 und eine Anzeigeneinblendung 19 erkannt werden. In Figur 8 stimmt der Zielpunkt 18 nicht mit dem Mittelpunkt des Reticles 17 überein. D.h. das Lasermodul 5 wurde mit Winkelversatz montiert. In diesem Fall kann jedoch der Zielpunkt 18 zur Anvisierung des Objektes genutzt werden um dessen Entfernung festzustellen. Der Zielvorgang zur Zielausrichtung der Waffe wird mit dem entsprechenden konventionellen Zielmittel vorgenommen.

Das System ist funktionell, solange der Laserzielpunkt 18 incl. Segmentanzeige 19 in das Sehfeld es vorhandenen optischen Systems eingeblendet wird. Die Einblendung von Laserzielpunkt 18 und Segmentanzeige 19 außerhalb der Sehfeldmitte des Ziel- bzw. Beobachtungssystems hat keinen negativen Einfluss auf die Ziellinienkonstanz.

Die Montageschnittstelle 4 des Lasermoduls ist winkeljustierbar in x-und y-Richtung ausgeführt, um die Einblendung der Laserzielmarke 18 und/oder der Anzeige 19 in das Sehfeld, insbesondere die Sehfeldmitte, der Ziel- bzw. Beobachtungsoptik zu ermöglichen. Allgemein und nicht beschränkt auf eines der vorgestellten Ausführungsbeispiele kann anstelle einer Winkeljustierung in x- und y-Richtung auch eine Verstehungseinrichtung zur Verstellung der Montageschnittstelle des Lasermoduls und/oder des optischen Fernrohrsystems allein in einer Richtung oder aber in allen drei Richtungen x, y und z vorgesehen sein.

### Bezugszeichenliste

- 1.: Zielfernrohr
- 2.: Objektiv
- 3.: Okular
- 4.: Befestigungsmittel, Montageschnittstelle des LEM-Moduls
- 5.: Laserentfemungsmesser-Modul (LEM-Modul)
- 6.: Sendekanal
- 7.: Empfangskanal
- 8.: Umlenkprisma
- 9.: optischer Kanal
- 10.: Punktstrahlerelement und/oder Pixeldisplay
- 11.: Kollimatoroptik
- 13.: Gehäuse
- 14.: Panzerfaust
- 15.: Befestigungsmitteln
- 16.: Zieloptik, z.B. monokulares Fernglas
- 17.: Reticle
- 18.: Zielpunkt
- 19.: Anzeigeneinblendung
- 20: Schwenkmechanismus
- 21.: Drehpunkt
- 22.: Schiene des Zielfernrohrs

- A: optische Achse des Zielfernrohrs in Objektiv und Okular

## Patentansprüche

1. Laserentfemungsmesser-Modul (LEM-Modul) zum lösbaren Befestigen an einem optischen Fernrohrsystem,
umfassend
einen Senderkanal und einen Empfängerkanal zur Entfernungsmessung,
wobei ein Anzeigekanal (9) vorgesehen ist, dessen eines Ende derart von außen zu einem Objektiv (2) des optischen Fernrohrsystems (1) anordenbar ist, dass eine Zielmarkierung (18) und/oder eine Anzeige, insbesondere eine Entfernungsanzeige (19), in das Sehfeld des optischen Fernrohrsystems (1) einspiegelbar ist.
**dadurch gekennzeichnet, dass**
eine Montageschnittstelle (4) des Laserentfernungsmesser-Moduls justierbar, insbesondere winkeljustierbar in x-und y-Richtung, ausgeführt ist, um die Einblendung der Zielmarkierung (18) und/oder der Anzeige (19) in das Sehfeld, insbesondere die Sehfeldmitte, des optischen Fernrohrsystems zu ermöglichen.

2. LEM-Modul nach Anspruch 1, **dadurch gekennzeichnet, dass** der Senderkanal (6) und der Empfangskanal (7) derart verstellbar ausgebildet sind, dass die Zielmarkierung (18) und/oder Anzeige (19) zu einem Reticle des optischen Fernrohrsystems überlagerbar ist.

3. LEM-Modul nach Anspruch 1 oder 2, **dadurch gekennzeichnet, dass** der Anzeigekanal (9) ein Punktstrahlerelement (10) zur Generierung einer Zielmarkierung (18) aufweist.

4. LEM-Modul nach einem der vorangehenden Ansprüche, **dadurch gekennzeichnet, dass** der Anzeigekanal (9) ein Pixeldisplay (10) zur Generierung einer Anzeige (19), insbesondere als Siebensegmentanzeige, enthält.

5. LEM-Modul nach einem der Ansprüche 3 oder 4, **dadurch gekennzeichnet, dass** der Anzeigekanal (9) eine Kollimatoroptik (11) zum Kollimieren der von dem Punktstrahlersegment (10) oder Pixeldisplay (10) ausgehenden Strahlung aufweist.

6. LEM-Modul nach einem der vorangehenden Ansprüche, dass der Anzeigekanal ein Prisma (8), insbesondere ein invariantes Prisma mit 180° Umlenkung zur Einspiegelung der Zielmarkierung (18) und/oder Entfernungsanzeige (19) aufweist.

7. LEM-Modul nach Anspruch 6, **dadurch gekennzeichnet, dass** das Prisma als invariantes 2*90° Stabprisma mit Dachkante ausgeführt ist.

8. LEM-Modul nach einem der Ansprüche 1 bis 5, **dadurch gekennzeichnet, dass** der Anzeigekanal eine invariante Spiegelbaugruppe, insbesondere eine Spiegelbaugruppe mit 180° Umlenkung zur Einspiegelung der Zielmarkierung (18) und/oder der Entfemungsanzeige (19) aufweist.

9. LEM-Modul nach einem der vorangehenden Ansprüche, **dadurch gekennzeichnet, dass** die Helligkeit der Zielmarkierung über manuelle Mittel oder über einen Sensor, der in Richtung des Lasersenders positionierbar ist, regelbar ist.

10. LEM-Modul nach einem der vorangehenden Ansprüche, **dadurch gekennzeichnet,**
**dass** das Umlenkprisma (8) schwenkbar und/oder klappbar befestigt ist.

11. LEM-Modul nach einem der vorangehenden Ansprüche, **dadurch gekennzeichnet,**
**dass** das Umlenkprisma (8) mit einer Befestigungseinrichtung am Objektiv (2) des optischen Femrohrsystems lösbar befestigbar ist.

12. LEM-Modul nach einem der vorangehenden Ansprüche, **dadurch gekennzeichnet,**
**dass** das Umlenkprisma (8) mit der Kollimatoroptik lösbar verbunden ist.

13. System bestehend aus einem optischen Fernrohrsystem und einem Laserentfemungsmesser-Modul (LEM-Modul) zum lösbaren Befestigen an dem
optischen Fernrohrsystem,
wobei das LEM-Modul einen Senderkanal und einen Empfängerkanal zur Entfernungsmessung und einen Anzeigekanal (9) umfasst, wobei ein Ende des Anzeigekanals (9) derart von außen zu einem Objektiv (2) des optischen Fernrohrsystems (1) anordenbar ist, dass eine Zielmarkierung (18) und/oder eine Anzeige, insbesondere eine Entfernungsanzeige (19), in das Sehfeld des optischen Fernrohrsystems (1) einspiegelbar ist.
**dadurch gekennzeichnet**
**dass** das Laserentfemungsmesser-Modul und das optische Fernrohrsystem zueinander justierbar, insbesondere winkeljustierbar in x-und y-Richtung, ausgeführt sind, um die Einblendung der Zielmarkierung (18) und/oder der Anzeige (19) in das Sehfeld, insbesondere die Sehfeldmitte, des optischen Femrohrsystems zu ermöglichen.

14. System nach Anspruch 13, **dadurch gekennzeichnet, dass** eine Montageschnittstelle (4) des Laserentfernungsmesser-Moduls nach einem der Ansprüche 1 bis 12 justierbar, insbesondere winkeljustierbar in x-und y-Richtung, ausgeführt ist, um die Einblendung der Zielmarkierung (18) und/oder der Anzeige (19) in das Sehfeld, insbesondere die Sehfeldmitte, des optischen Fernrohrsystems zu ermöglichen.

15. System nach Anspruch 13 oder 14, **dadurch gekennzeichnet, dass** eine Montageschnittstelle, z.B. eine Schiene (22) des optischen Fernrohrsystems justierbar, insbesondere winkeljustierbar in x-und y-Richtung, ausgeführt ist, um die Einblendung der Zielmarkierung (18) und/oder der Anzeige (19) in das Sehfeld, insbesondere die Sehfeldmitte, des optischen Fernrohrsystems zu ermöglichen.
